# EUROPEAN PATENT SPECIFICATION

(11) **EP 2 345 551 B1**
(45) Date of publication and mention of the grant of the patent: **20.03.2013**
(21) Application number: 10196171.2
(22) Date of filing: 21.12.2010
(51) Int. Cl.: B60K 17/28, F16H 57/04

(54) **Power take off assembly with lube control system**
Zapfwellenanordnung mit Schmiersteuerungssystem
Ensemble de prise de force avec système de contrôle de l'huile

(30) Priority: 19.01.2010 US 689634
(43) Date of publication of application: 20.07.2011
(73) Proprietor: DEERE & COMPANY, Moline, Illinois 61265-8098 (US)
(72) Inventor: Vandenberg, Chad G., Dike, IA 50624 (US); Richard, Remy, 02820 Montaigu (FR); Buttjer, Jeffrey A., Cedar Falls, IA 50613 (US); DeFrancq, Hubert, 02190 Guignicourt (FR)
(74) Representative: Dehnhardt, Florian Christopher

(56) References cited:
- EP-A2- 0 952 367
- GB-A- 1 562 518
- US-A- 3 669 229
- US-A- 4 640 401
- US-A1- 2005 172 740

## Description

The present invention relates to a power take off assembly with a lube control system.

Such a power take off assembly comprising the features of the preamble of claim 1 is known from GB 1 562 518 A. The power take off assembly comprises a casing in which a pair of meshing gears is arranged. The pair of meshing gears includes a driving pinion which is connected to an engine driven input shaft by means of an intermediary clutch and a driven pinion which is connected to an output shaft. A hydraulic pump is driven by the input shaft so that oil from the casing can be re-applied to the meshing gears. For this, a return line is connected between the hydraulic pump and the casing, wherein a pressure relief valve controls the oil flow.

The input shaft may be disconnected from the rest of the gear train, allowing the rest of the gear train to be static so the gears will not consume or waste any power. It would be desirable to have a power take off assembly wherein hydraulic fluid is directed to the input shaft when the input shaft is disconnected from the rest of the gear train.

Accordingly, an object of this invention is to provide a power take off with a lube control system wherein hydraulic fluid is directed to the input shaft when the input shaft is disconnected from the rest of the gear train. A further object of the invention is to provide such a lube control system which minimizes the work required of the hydraulic pump.

This and other objects are achieved by the present invention, wherein a power take off assembly with a lube control system is provided. The power take off assembly has an input shaft driven by a power source, an output shaft, a transmission for transmitting torque from the input shaft to the output shaft, and a disconnect unit for selectively coupling and uncoupling the input shaft from the transmission. The lube control system comprises a component lube circuit for lubricating a component of the power take off assembly, a hydraulic pump for supplying hydraulic fluid from a lube reservoir, and a lube control valve for controlling communication of hydraulic fluid from the hydraulic pump to the component lube circuit. The lube control valve is operatively coupled to the disconnect unit so that when the disconnect unit is engaged the lube control valve blocks communication from the hydraulic pump to the component lube circuit, and when the disconnect unit is disengaged the lube control valve communicates the hydraulic pump to the component lube circuit.

For a complete understanding of the objects, techniques, and structure of the invention reference should be made to the following detailed description and accompanying drawings, wherein similar components are designated by identical reference numerals:
- Fig. 1: is a simplified schematic diagram of an inventive power take off assembly with a lube control system in an engaged state, and
- Fig. 2: is a simplified schematic diagram of the power take off assembly of Fig. 1 with the lube control system in a disengaged state.

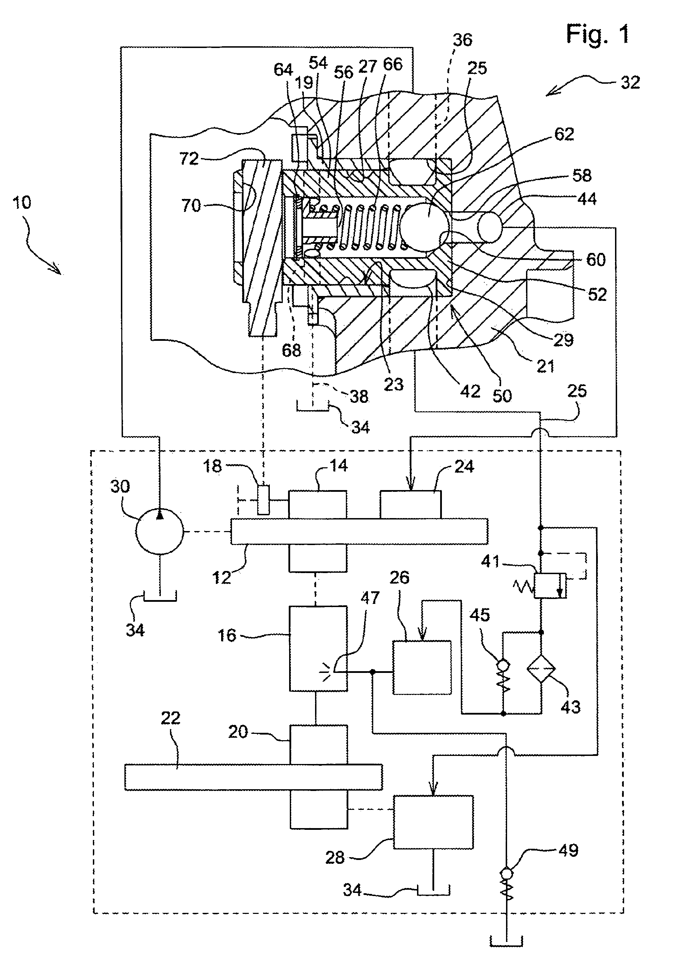

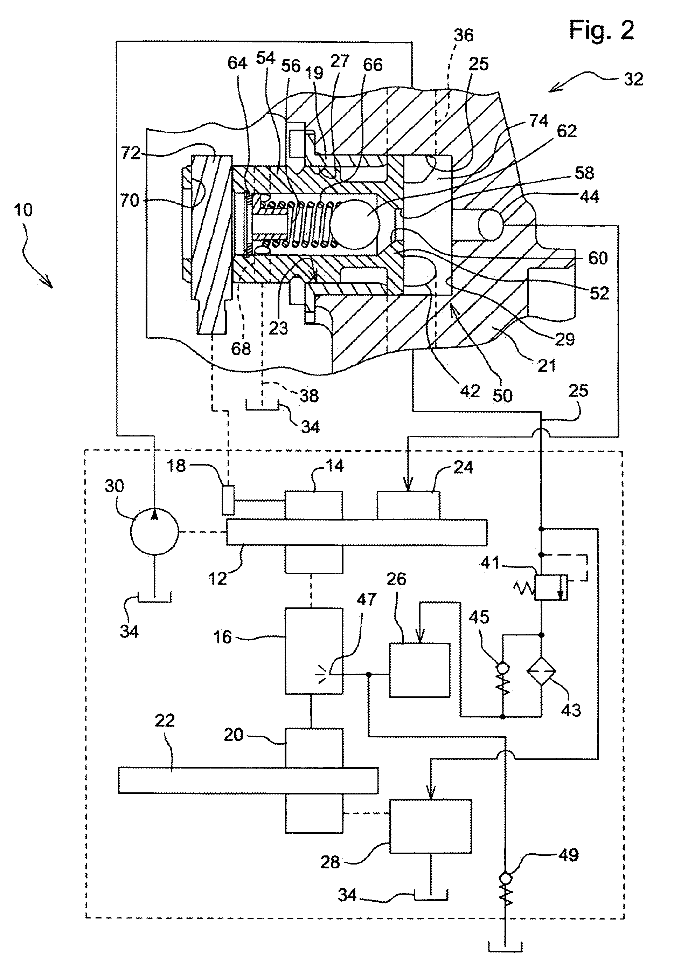

Referring to Figs. 1 and 2, a power take off assembly 10 includes an input shaft 12 which is continuously driven by a power source, such as a vehicle engine (not shown). The input shaft 12 is coupled to a disconnect unit 14. Disconnect unit 14 is coupled to a gear or transmission 16. Disconnect unit 14 includes an input member 18 which is shiftable to place the disconnect unit 14 in an engaged state (see Fig. 1) and in a disengaged state (see Fig. 2). In its disengaged state, the disconnect unit 14 prevents torque from being transmitted from the input shaft 12 to the transmission 16. The transmission 16 is coupled to an output shaft 22 through a hydraulically operated clutch 20.

The input shaft 12 is lubricated by an input shaft lube circuit 24. With other words, a component lube circuit 24 for lubricating a component 12 of the power take off assembly 10 is provided. Other components of the power take off assembly 10 are lubricated by a transmission lube circuit or power take off lube circuit 26. Clutch 20 is controlled by a conventional clutch control unit 28.

The input shaft 12 drives a hydraulic pump 30. A lube control system 32 controls communication of hydraulic fluid for control and lubrication purposes between the hydraulic pump 30, lube reservoir 34, lube circuits 24 and 26, and clutch control unit 28. Lube control system 32 includes a housing 21 which has a valve bore 23 with a larger diameter portion 25 and a smaller diameter portion 27 formed by sleeve 19 having a cylindrical side wall and an end wall 29. The housing 21 forms a pump port 36 which connects the valve bore 23 to an outlet of hydraulic pump 30, a second port 42 which connects the valve bore 23 to fluid line 25, and a first port 44. First port 44 extends through end wall 29 and connects the valve bore 23 to input shaft lube circuit 24.

Fluid line 25 connects second port 42 to clutch control unit 28 and to an inlet of pressure regulating valve 41. An outlet of pressure regulating valve 41 is connected in parallel to oil cooler 43 and cooler bypass valve 45. Outlets of oil cooler 43 and cooler bypass valve 45 are connected to an inlet of power take off lube circuit 26. An outlet of power take off lube circuit 26 is connected to a forced idler lube orifice 47 and to sump via a lube relief valve 49. Pressure regulating valve 41 prevents power take off lube circuit 26 from receiving hydraulic fluid unless the pressure is at least a minimum or system pressure, such as 18 bar.

A hollow cylindrical valve member or valve spool 50 is slidable in the valve bore 23. Valve spool 50 has a larger diameter head 52 which slides in larger diameter portion 25 and a smaller diameter sleeve 54 which slides in smaller diameter portion 27 formed by sleeve 19. Smaller diameter sleeve 54 surrounds a chamber 56. An axial bore 58 extends though a central portion of the larger diameter head 52 and communicates chamber 56 to first port 44. Valve spool 50 forms a frustoconical surface or valve seat 60. A valve ball 62 is received within chamber 56. An annular spring stop 64 is mounted in the valve spool 50 in chamber 56 spaced apart from valve seat 60. A spring 66 engages the annular spring stop 64 and the valve ball 62 and urges the valve ball 62 towards the valve seat 60 such in that a pressure limiting valve is formed. A plurality of radial passages 68 communicate chamber 56 with the exterior of the smaller diameter sleeve 54. A passage 38 connects the radial passages 68 to lube reservoir 34. An arm bore 70 extends radially though the end of smaller diameter sleeve 54. Arm bore 70 receives a link arm 72 which is mechanically connected to the input member 18 of the disconnect unit 14.

When the disconnect unit 14 is engaged, the lube control system 32 will be in the position shown in Fig. 1 with the valve spool 50 engaging the end wall 29. In this position hydraulic fluid will flow from hydraulic pump 30 though pump port 36, around annular groove of smaller diameter sleeve 54 to second port 42 and to clutch control unit 28 and to power take off lube circuit 26 via pressure regulating valve 41. The valve spool 50 blocks the communication between the hydraulic pump 30 and the first port 44, and no hydraulic fluid will flow into chamber 56 and through axial bore port 58 or first port 44. Thus, when the power take off assembly 10 is connected by disconnect unit 14, the lube will flow to the power take off lube circuit 26 only when the lube pressure exceeds the system pressure, such as 18 bar, set by the pressure regulating valve 41.

Referring now to Fig. 2, when the disconnect unit 14 is disengaged, the input member 18 will shift link arm 72 and valve spool 50 to the left into the position shown. In this position larger diameter head 52 will be spaced apart from end wall 29 and communication will be open from pump port 36 to second port 42 and from pump port 36 to first port 44. Thus, hydraulic fluid will flow to input shaft lube circuit 24, in addition to power take off lube circuit 26 (if pressure regulating valve 41 is open) and to clutch control unit 28. If the pressure in chamber 74 between larger diameter head 52 and end wall 29 reaches a certain pressure, such as 4 bar, this fluid pressure will move valve ball 62 away from valve seat 60 and open communication between chamber 74 and lube reservoir 34 via chamber 56, radial passages 68 and passage 38. The pressure differential between the larger diameter head 52 and the smaller diameter sleeve 54 helps to keep valve spool 50 in the open position shown in Fig. 2. As a result, hydraulic fluid flows to input shaft lube circuit 24 at the lower 4 bar pressure, while the pressure regulating valve 41 remains closed. Thus, lube flow is provided to the input shaft lube circuit 24, but less work is required of the hydraulic pump 30 because it only has to supply fluid at a lower pressure of 4 bar.

## Claims

1. A power take off assembly with a lube control system, the power take assembly (10) having an input shaft (12) driven by a power source; an output shaft (22); a transmission (16) for transmitting torque from the input shaft (12) to the output shaft (22); and a disconnect unit (14) for selectively coupling and uncoupling the input shaft (12) from the transmission (16), the lube control system comprising a component lube circuit (24) for lubricating a component (12) of the power take off assembly (10); a hydraulic pump (30) for supplying hydraulic fluid from a lube reservoir (34); and a lube control valve (32) for controlling communication of hydraulic fluid from the hydraulic pump (30) to the component lube circuit (24), **characterized in that** the lube control valve (32) is operatively coupled to the disconnect unit (14) so that when the disconnect unit (14) is engaged the lube control valve (32) blocks communication from the hydraulic pump (30) to the component lube circuit (24), and when the disconnect unit (14) is disengaged the lube control valve (32) communicates the hydraulic pump (30) to the component lube circuit (24).

2. The power take off assembly according to claim 1, **characterized by** a transmission lube circuit (26) for lubrication the transmission (16), wherein the lube control valve (32) communicates hydraulic fluid to the transmission lube circuit (26) in the engaged as well as the disengaged state of the disconnect unit (14).

3. The power take off assembly according to claim 2, **characterized in that** the lube control valve (32) comprises a housing (21) having a valve bore (23) therein, a pump port (36) communicating the valve bore (23) with the hydraulic pump (30), a first port (44) communicating the valve bore (23) with the component lube circuit (24), and a second port (42) communicating the valve bore (23) with the transmission lube circuit (26); and a valve spool (50) slidable in the valve bore (23) and coupled to the disconnect unit (14), the valve spool (50) being movable from a first position wherein communication is open between the pump port (36) and the second port (42) and communication is closed between the pump port (36) and the first port (44), to a second position wherein communication is open between the pump port (36) and the second port (42) and communication is open between the pump port (36) and the first port (44).

4. The power take off assembly according to claim 3, **characterized in that** the lube control valve (32) further comprises a pressure limiting valve (60, 62, 64, 66) which is operable to limit pressure in the first port (44).

5. The power take off assembly according to claim 3, **characterized in that** the first port (44) extends through an end wall (29) of the valve bore (23), and the valve spool (50) has a smaller diameter sleeve (54) and a larger diameter head (52) at one end thereof, the larger diameter head (52) has an axial bore (58) extending therethrough, one end of the axial bore (58) being in communication with the first port (44), another end of the axial bore (58) being surrounded by a valve seat (60), and the valve spool (50) has radial passages (68) extending therethrough and communicating a chamber (56) of the valve spool (50) with the lube reservoir (34), wherein the lube control valve (32) comprises a valve ball (62) received by the valve spool (50) and engagable with the valve seat (60); and a spring (66) received by the valve spool (50) and biased to urge the valve ball (62) towards with the valve seat (60), the valve ball (62) being movable away from the valve seat (60) to thereby limit pressure in the first port (44).

6. The power take off assembly according to claim 1, **characterized in that** the control valve (32) comprises a housing (21) having a valve bore (23) therein, a pump port (36) communicating the valve bore (23) with the hydraulic pump (30), a first port (44) communicating the valve bore (23) with the component lube circuit (24); and a valve spool (50) slidable in the valve bore (23) and coupled to the disconnect unit (14), the valve spool (50) being movable from a first position closing communication between the pump port (36) and the first port (44) to a second position opening communication between the pump port (36) and the first port (44).

7. The power take off assembly according to claim 3, **characterized in that** the valve bore (23) has a cylindrical side wall joined to an axially facing end wall (29), the pump port (36) and second port (42) extending through the side wall, and the first port (44) extending through said end wall (29), wherein the valve spool (50) comprises a smaller diameter sleeve (54) connected at one end to a larger diameter head (52), the smaller diameter sleeve (54) having an outer annular groove adjacent the larger diameter head (52), the larger diameter head (52) having an axial bore (58) extending axially therethrough, the larger diameter head (52) forming a valve seat (60) surrounding the axial bore (58), the outer annular groove communicating the pump port (36) with the second port (42) when the valve spool (50) is in its first position, the smaller diameter sleeve (54) having radial passages (68) extending therethrough and communicating a chamber (56) of the smaller diameter sleeve (54) with the lube reservoir (34), and the larger diameter head (52) engaging the end wall (29) to close communication between the pump port (36) and the first port (44) when the valve spool (50) is in its first position; a valve ball (62) received within the smaller diameter sleeve (54); and a spring (66) biased to urge the valve ball (62) into engagement with the valve seat (60) to close communication through the axial bore (58).

8. The power take off assembly according to claim 6, **characterized in that** the valve spool (50) comprises an arm bore (70) extending radially though an end portion, wherein the arm bore (70) receives a link arm (72) which is coupled to the disconnect unit (14).

9. The power take off assembly according to claim 3, **characterized by** a fluid line (25) between the control valve (32) and a clutch control unit (28) for controlling a clutch (20) of the power take off assembly (10), the control valve (32) communicating the pump port (36) to the fluid line (25) in both its first and second positions.

10. The power take off assembly according to claim 2, **characterized by** a pressure regulating valve (41) between the control valve (32) and the transmission lube circuit (26), the pressure regulating valve (41) closing communication between the control valve (32) and the transmission lube circuit (26) unless pump pressure exceeds a limit pressure.

11. The power take off assembly according to claim 1, **characterized in that** the component of the power take off assembly (10) comprises the input shaft (12) driven by the power source.

## Patentansprüche

1. Zapfwellenanordnung mit einem Schmiersteuerungssystem, wobei die Zapfwellenanordnung (10) eine durch eine Energiequelle angetriebene Eingangswelle (12); eine Ausgangswelle (22); ein Getriebe (16) zum Übertragen von Drehmoment von der Eingangswelle (12) zur Ausgangswelle (22) und eine Trenneinheit (14) zum selektiven Koppeln und Entkoppeln der Eingangswelle (12) vom Getriebe (16) aufweist, wobei das Schmiersteuerungssystem einen Komponentenschmierkreis (24) zum Schmieren einer Komponente (12) der Zapfwellenanordnung (10), eine Hydraulikpumpe (30) zur Zuführung von Hydraulikfluid aus einem Schmiermittelspeicher (34) und ein Schmiersteuerventil (32) zur Steuerung des Leitens von Hydraulikfluid von der Hydraulikpumpe (30) zum Komponentenschmierkreis (24) umfasst, **dadurch gekennzeichnet, dass** das Schmiersteuerventil (32) mit der Trenneinheit (14) wirkgekoppelt ist, so dass das Schmiersteuerventil (32) eine Verbindung von der Hydraulikpumpe (30) zum Komponentenschmierkreis (24) sperrt, wenn die Trenneinheit (14) eingerückt ist, und das Schmiersteuerventil (32) eine Verbindung der Hydraulikpumpe (30) mit dem Komponentenschmierkreis (24) herstellt, wenn die Trenneinheit (14) ausgerückt ist.

2. Zapfwellenanordnung nach Anspruch 1, **gekennzeichnet durch** einen Getriebeschmierkreis (26) zum Schmieren des Getriebes (16), wobei das Schmiersteuerventil (32) sowohl im eingerückten als auch im ausgerückten Zustand der Trenneinheit (14) Hydraulikfluid zum Getriebschmierkreis (26) leitet.

3. Zapfwellenanordnung nach Anspruch 2, **dadurch gekennzeichnet, dass** das Schmiersteuerventil (32) ein Gehäuse (21) mit einer Ventilbohrung (23) darin, einer Pumpenöffnung (36), die eine Verbindung der Ventilbohrung (23) mit der Hydraulikpumpe (30) herstellt, einer ersten Öffnung (44), die eine Verbindung der Ventilbohrung (23) mit dem Komponentenschmierkreis (24) herstellt, und einer zweiten Öffnung (42), die eine Verbindung der Ventilbohrung (23) mit dem Getriebeschmierkreis (26) herstellt, und einen Ventilschieber (50) umfasst, der in der Ventilbohrung (23) verschoben werden kann und mit der Trenneinheit (14) gekoppelt ist, wobei der Ventilschieber (50) aus einer ersten Position, in der die Verbindung zwischen der Pumpenöffnung (36) und der zweiten Öffnung (42) hergestellt ist und die Verbindung zwischen der Pumpenöffnung (36) und der ersten Öffnung (44) unterbrochen ist, in eine zweite Position, in der die Verbindung zwischen der Pumpenöffnung (36) und der zweiten Öffnung (42) hergestellt ist und die Verbindung zwischen der Pumpenöffnung (36) und der ersten Öffnung (44) hergestellt ist, beweglich ist.

4. Zapfwellenanordnung nach Anspruch 3, **dadurch gekennzeichnet, dass** das Schmiersteuerventil (32) ferner ein Druckbegrenzungsventil (60, 62, 64, 66) umfasst, das zur Begrenzung des Drucks in der ersten Öffnung (44) betätigbar ist.

5. Zapfwellenanordnung nach Anspruch 3, **dadurch gekennzeichnet, dass** sich die erste Öffnung (44) durch eine Endwand (29) der Ventilbohrung (23) erstreckt und der Ventilschieber (50) eine Hülse (54) mit kleinerem Durchmesser und an seinem einen Ende einen Kopf (52) mit größerem Durchmesser aufweist, wobei der Kopf (52) mit größerem Durchmesser eine sich durch ihn hindurch erstreckende Axialbohrung (58) aufweist, wobei ein Ende der Axialbohrung (58) mit der ersten Öffnung (44) in Verbindung steht, ein anderes Ende der Axialbohrung (58) von einem Ventilsitz (60) umgeben ist und der Ventilschieber (50) radiale Kanäle (68) aufweist, die sich durch ihn hindurch erstrecken und eine Verbindung einer Kammer (56) des Ventilschiebers (50) mit dem Schmiermittelspeicher (34) herstellen, wobei das Schmiersteuerventil (32) eine Ventilkugel (62), die vom Ventilschieber (50) aufgenommen wird und mit dem Ventilsitz (60) in Eingriff gebracht werden kann, und eine Feder (66) umfasst, die vom Ventilschieber (50) aufgenommen wird und so vorgespannt ist, dass sie die Ventilkugel (62) zum Ventilsitz (60) drückt, wobei die Ventilkugel (62) vom Ventilsitz (60) weg bewegt werden kann, um dadurch den Druck in der ersten Öffnung (44) zu begrenzen.

6. Zapfwellenanordnung nach Anspruch 1, **dadurch gekennzeichnet, dass** das Steuerventil (32) ein Gehäuse (21) mit einer Ventilbohrung (23) darin, einer Pumpenöffnung (36), die eine Verbindung der Ventilbohrung (23) mit der Hydraulikpumpe (30) herstellt, einer ersten Öffnung (44), die eine Verbindung der Ventilbohrung (23) mit dem Komponentenschmierkreis (24) herstellt, und einen Ventilschieber (50) umfasst, der in der Ventilbohrung (23) verschoben werden kann und mit der Trenneinheit (14) gekoppelt ist, wobei der Ventilschieber (50) aus einer ersten Position, durch die die Verbindung zwischen der Pumpenöffnung (36) und der ersten Öffnung (44) unterbrochen wird, in eine zweite Position, durch die die Verbindung zwischen der Pumpenöffnung (36) und der ersten Öffnung (44) hergestellt wird, beweglich ist.

7. Zapfwellenanordnung nach Anspruch 3, **dadurch gekennzeichnet, dass** die Ventilbohrung (23) eine zylindrische Seitenwand aufweist, die mit einer axial zugewandten Endwand (29) verbunden ist, wobei sich die Pumpenöffnung (36) und die zweite Öffnung (42) durch die Seitenwand erstrecken und sich die erste Öffnung (44) durch die Endwand (29) erstreckt, wobei der Ventilschieber (50) eine Hülse (54) mit kleinerem Durchmesser, die an einem Ende mit einem Kopf (52) mit größerem Durchmesser verbunden ist, wobei die Hülse (54) mit kleinerem Durchmesser eine äußere Ringnut angrenzend an den Kopf (52) mit größerem Durchmesser aufweist, wobei der Kopf (52) mit größerem Durchmesser eine sich durch ihn axial erstreckende Axialbohrung (58) aufweist, wobei der Kopf (52) mit größerem Durchmesser einen Ventilsitz (60) ausbildet, der die Axialbohrung (58) umgibt, wobei die äußere Ringnut eine Verbindung der Pumpenöffnung (36) mit der zweiten Öffnung (42) herstellt, wenn der Ventilschieber (50) in seiner ersten Position ist, wobei die Hülse (54) mit kleinerem Durchmesser radiale Kanäle (68) aufweist, die sich durch sie erstrecken und eine Verbindung einer Kammer (56) der Hülse (54) mit kleinerem Durchmesser mit dem Schmiermittelspeicher (34) herstellen, und wobei der Kopf (52) mit größerem Durchmesser die Endwand (29) in Eingriff nimmt, um die Verbindung zwischen der Pumpenöffnung (36) und der ersten Öffnung (44) zu unterbrechen, wenn der Ventilschieber (50) in seiner ersten Position ist; eine Ventilkugel (62), die in der Hülse (54) mit kleinerem Durchmesser aufgenommen wird, und eine Feder (66) umfasst, die so vorgespannt ist, dass sie die Ventilkugel (62) in Eingriff mit dem Ventilsitz (60) drückt, um die Verbindung durch die Axialbohrung (58) zu unterbrechen.

8. Zapfwellenanordnung nach Anspruch 6, **dadurch gekennzeichnet, dass** der Ventilschieber (50) eine Bohrung (70) für einen Arm umfasst, die sich radial durch einen Endabschnitt erstreckt, wobei die Bohrung (70) für einen Arm einen Verbindungsarm (72) aufnimmt, der mit der Trenneinheit (14) gekoppelt ist.

9. Zapfwellenanordnung nach Anspruch 3, **gekennzeichnet durch** eine Fluidleitung (25) zwischen dem Steuerventil (32) und einem Kupplungssteuergerät (28) zum Steuern einer Kupplung (20) der Zapfwellenanordnung (10), wobei das Steuerventil (32) eine Verbindung der Pumpenöffnung (36) mit der Fluidleitung (25) sowohl in seiner ersten als auch seiner zweiten Position herstellt.

10. Zapfwellenanordnung nach Anspruch 2, **gekennzeichnet durch** ein Druckregelventil (41) zwischen dem Steuerventil (32) und dem Getriebeschmierkreis (26), wobei das Druckregelventil (41), außer wenn der Pumpendruck einen Grenzdruck überschreitet, die Verbindung zwischen dem Steuerventil (32) und dem Getriebeschmierkreis (26) unterbricht.

11. Zapfwellenanordnung nach Anspruch 1, **dadurch gekennzeichnet, dass** die Komponente der Zapfwellenanordnung (10) die durch die Energiequelle angetriebene Eingangswelle (12) umfasst.

## Revendications

1. Ensemble de prise de force avec système de contrôle de lubrification, l'ensemble de prise de force (10) ayant un arbre d'entrée (12) entraîné par une source de puissance ; un arbre de sortie (22) ; une transmission (16) pour transmettre un couple de l'arbre d'entrée (12) à l'arbre de sortie (22) ; et une unité de déconnexion (14) pour accoupler et désaccoupler de manière sélective l'arbre d'entrée (12) de la transmission (16), le système de contrôle de lubrification comprenant un circuit de lubrification de composant (24) pour lubrifier un composant (12) de l'ensemble de prise de force (10) ; une pompe hydraulique (30) pour l'alimentation en fluide hydraulique depuis un réservoir de lubrifiant (34) ; et une soupape de contrôle de lubrification (32) pour contrôler la communication de fluide hydraulique depuis la pompe hydraulique (30) jusqu'au circuit de lubrification de composant (24), **caractérisé en ce que** la soupape de contrôle de lubrification (32) est accouplée fonctionnellement à l'unité de déconnexion (14) de telle sorte que lorsque l'unité de déconnexion (14) est engagée, la soupape de contrôle de lubrification (32) bloque la communication de la pompe hydraulique (30) au circuit de lubrification de composant (24), et lorsque l'unité de déconnexion (14) est désengagée, la soupape de contrôle de lubrification (32) fasse communiquer la pompe hydraulique (30) avec le circuit de lubrification de composant (24).

2. Ensemble de prise de force selon la revendication 1, **caractérisé par** un circuit de lubrification de transmission (26) pour la lubrification de la transmission (16), la soupape de contrôle de lubrification (32) faisant communiquer du fluide hydraulique avec le circuit de lubrification de transmission (26) dans l'état engagé et dans l'état désengagé de l'unité de déconnexion (14).

3. Ensemble de prise de force selon la revendication 2, **caractérisé en ce que** la soupape de contrôle de lubrification (32) comprend un boîtier (21) contenant un alésage de soupape (23), un orifice de pompe (36) faisant communiquer l'alésage de soupape (23) avec la pompe hydraulique (30), un premier orifice (44) faisant communiquer l'alésage de soupape (23) avec le circuit de lubrification de composant (24), et un deuxième orifice (42) faisant communiquer l'alésage de soupape (23) avec le circuit de lubrification de transmission (26) ; et un tiroir cylindrique de soupape (50) pouvant coulisser dans l'alésage de soupape (23) et accouplé à l'unité de déconnexion (14), le tiroir cylindrique de soupape (50) étant déplaçable depuis une première position dans laquelle la communication est ouverte entre l'orifice de pompe (36) et le deuxième orifice (42) et la communication est fermée entre l'orifice de pompe (36) et le premier orifice (44), jusque dans une deuxième position dans laquelle la communication est ouverte entre l'orifice de pompe (36) et le deuxième orifice (42) et la communication est ouverte entre l'orifice de pompe (36) et le premier orifice (44).

4. Ensemble de prise de force selon la revendication 3, **caractérisé en ce que** la soupape de contrôle de lubrification (32) comprend en outre une soupape de limitation de la pression (60, 62, 64, 66) qui a pour fonction de limiter la pression dans le premier orifice (44).

5. Ensemble de prise de force selon la revendication 3, **caractérisé en ce que** le premier orifice (44) s'étend à travers une paroi d'extrémité (29) de l'alésage de soupape (23), et le tiroir cylindrique de soupape (50) a un manchon de plus petit diamètre (54) et une tête de plus grand diamètre (52) à une extrémité de celui-ci, la tête de plus grand diamètre (52) a un alésage axial (58) s'étendant à travers elle, une extrémité de l'alésage axial (58) étant en communication avec le premier orifice (44), une autre extrémité de l'alésage axial (58) étant entourée par un siège de soupape (60) et le tiroir cylindrique de soupape (50) ayant des passages radiaux (68) s'étendant à travers lui et faisant communiquer une chambre (56) du tiroir cylindrique de soupape (50) avec le réservoir de lubrifiant (34), la soupape de contrôle de lubrification (32) comprenant une bille de soupape (62) reçue par le tiroir cylindrique de soupape (50) et pouvant s'engager avec le siège de soupape (60) ; et un ressort (66) reçu par le tiroir cylindrique de soupape (50) et sollicité de manière à pousser la bille de soupape (62) vers le siège de soupape (60), la bille de soupape (62) étant déplaçable à l'écart du siège de soupape (60) pour ainsi limiter la pression dans le premier alésage (44).

6. Ensemble de prise de force selon la revendication 1, **caractérisé en ce que** la soupape de contrôle (32) comprend un boîtier (21) contenant un alésage de soupape (23), un orifice de pompe (36) faisant communiquer l'alésage de soupape (23) avec la pompe hydraulique (40), un premier orifice (44) faisant communiquer l'alésage de soupape (23) avec le circuit de lubrification de composant (24) ; et un tiroir cylindrique de soupape (50) pouvant coulisser dans l'alésage de soupape (23) et accouplé à l'unité de déconnexion (14), le tiroir cylindrique de soupape (50) étant déplaçable depuis une première position fermant la communication entre l'orifice de pompe (36) et le premier orifice (44) jusqu'à une deuxième position ouvrant la communication entre l'orifice de pompe (36) et le premier orifice (44).

7. Ensemble de prise de force selon la revendication 3, **caractérisé en ce que** l'alésage de soupape (23) a une paroi latérale cylindrique jointe à une paroi d'extrémité orientée axialement (29), l'orifice de pompe (36) et le deuxième orifice (42) s'étendant à travers la paroi latérale, et le premier orifice (44) s'étendant à travers ladite paroi d'extrémité (29), le tiroir cylindrique de soupape (50) comprenant un manchon de plus petit diamètre (54) connecté à une extrémité à une tête de plus grand diamètre (52), le manchon de plus petit diamètre (54) ayant une gorge annulaire externe adjacente à la tête de plus grand diamètre (52), la tête de plus grand diamètre (52) ayant un alésage axial (58) s'étendant axialement à travers elle, la tête de plus grand diamètre (52) formant un siège de soupape (60) entourant l'alésage axial (58), la gorge annulaire externe faisant communiquer l'orifice de pompe (36) avec le deuxième orifice (42) quand le tiroir cylindrique de soupape (50) est dans sa première position, le manchon de plus petit diamètre (54) ayant des passages radiaux (68) s'étendant à travers lui et faisant communiquer une chambre (56) du manchon de plus petit diamètre (54) avec le réservoir de lubrifiant (34), et la tête de plus grand diamètre (52) s'engageant avec la paroi d'extrémité (29) pour fermer la communication entre l'orifice de pompe (36) et le premier orifice (44) lorsque le tiroir cylindrique de soupape (50) est dans sa première position ; une bille de soupape (62) reçue à l'intérieur du manchon de plus petit diamètre (54) ; et un ressort (66) sollicité de manière à pousser la bille de soupape (62) en engagement avec le siège de soupape (60) pour fermer la communication à travers l'alésage axial (58).

8. Ensemble de prise de force selon la revendication 6, **caractérisé en ce que** le tiroir cylindrique de soupape (50) comprend un alésage de bras (70) s'étendant radialement à travers une portion d'extrémité, l'alésage de bras (70) recevant un bras de liaison (72) qui est accouplé à l'unité de déconnexion (14).

9. Ensemble de prise de force selon la revendication 3, **caractérisé par** une ligne fluidique (25) entre la soupape de contrôle (32) et une unité de contrôle d'embrayage (28) pour contrôler un embrayage (20) de l'ensemble de prise de force (10), la soupape de contrôle (32) faisant communiquer l'orifice de pompe (36) avec la ligne fluidique (25) dans sa première et dans sa deuxième position.

10. Ensemble de prise de force selon la revendication 2, **caractérisé par** une soupape de régulation de la pression (41) entre la soupape de contrôle (32) et le circuit de lubrification de transmission (26), la soupape de régulation de la pression (41) fermant la communication entre la soupape de contrôle (32) et le circuit de lubrification de transmission (26) sauf si la pression de la pompe dépasse une pression limite.

11. Ensemble de prise de force selon la revendication 1, **caractérisé en ce que** le composant de l'ensemble de prise de force (10) comprend l'arbre d'entrée (12) entraîné par la source de puissance.
